# EUROPEAN PATENT SPECIFICATION

(11) **EP 0 680 927 B1**
(45) Date of publication and mention of the grant of the patent: **05.03.1997**
(21) Application number: 95250160.9
(22) Date of filing: 07.06.1993
(51) Int. Cl.: B67D 3/00, B67D 1/12

(54) **Beverage dispensing device for a bar**
Getränke-Abgabevorrichtung für eine Bar
Distributeur de boisson pour bar

(30) Priority: 08.06.1992 US 894267; 08.06.1992 US 894269; 08.06.1992 US 895084
(43) Date of publication of application: 08.11.1995
(62) Divisional of application: 93912510.0
(73) Proprietor: AZBAR INC., Vanier, Québec G1M 1C7 (CA)
(72) Inventor: Simard, Gilberd, Beauport, Québec G1C 5E6 (CA)
(74) Representative: Patentanwälte Wenzel & Kalkoff

(56) References cited:
- EP-A- 0 194 486
- GB-A- 2 116 763
- US-A- 3 920 149
- US-A- 4 278 186

## Description

### Field of the Invention

The present invention relates to a system for controlling the dispensing of beverages in a bar. The invention relates further to a non-contact coding device working in a magnetic field for use with a liquor bottle stopper and electromagnetic valve system, and a system for dispensing bottles in a bar.

### Background of the Invention

Beverage dispenser coding devices are known in the art. US patent 3,920,149 (Fortino et al.) describes a liquor bottle stopper and electromagnetic valve system which has three metal bands on the spout of the stopper whose presence can be detected by use of three detector coils, when the activator coil is energized. This system allows detection of up to seven different kinds of liquor.

In the prior art systems, it is difficult to efficiently detect a large number of different bottles.

### Summary of the Invention

It is an object of the invention to provide a beverage dispenser coding device which is able to encode a large number of different unique objects which can be quickly and efficiently detected in the presence of a magnetic field. It is a further object of the invention to provide such a device at a low cost.

According to the invention, there is provided a beverage dispenser coding device for use with a magnetically activated bottle stopper valve. The device comprises a primary inductance coil provided on an activator coil unit for use in opening the stopper valve, a secondary inductance coil provided on the stopper valve, rectifier means connected to the secondary coil for rectifying and regulating current generated in the secondary coil, serial identifier circuit means connected to the rectifier means for making a pattern of impedance changes in the secondary coil, the pattern being a serial bit pattern representing an identification number, an oscillator connected to the primary coil, and demodulator and decoder means connected to the primary coil for detecting and decoding the pattern to obtain the identification number.

Preferably, the circuit means, the rectifier means and the secondary coil are provided on a printed circuit board. The rectifier means may comprise a diode bridge and a voltage regulator.

According to the invention, there is also provided a beverage dispenser coding device for use with a magnetically activated bottle stopper valve. The device comprises a plurality of Hall effect transducers provided on a base of an activator coil unit for use in opening the stopper valve, a plurality of metal peg receiving means provided on the stopper valve to be proximate the transducers when said activator coil unit is placed on the stopper valve, alignment means for aligning the transducers with respect to the peg receiving means in a predetermined position, and decoder means for reading the transducers when the activator coil is energized to determine whether a metal peg is present in the corresponding metal peg receiving means and thereby to obtain a binary encoded identification number.

Preferably, the transducers are Hall effect microswitches. The alignment means may comprise a wedge shaped tongue and notch arrangement provided on the activator coil unit and the stopper valve. The device may also comprise one extra Hall effect microswitch on the activator coil unit and one extra corresponding metal peg receiving means provided with an extra metal peg on the stopper valve. The extra metal peg is given a different permeability with respect to the extra Hall effect microswitch such that it can be used by timing for determining a position of the extra metal peg. The transducers may be eight in number (excluding the extra one), such that the identification number is between 1 and 255.

### Brief Description of the Drawings

Fig. 1 is a block diagram of the device according to the preferred embodiment; and
Fig. 2 is a block diagram of the device according to the second embodiment.

### Detailed Description of the Preferred Embodiment

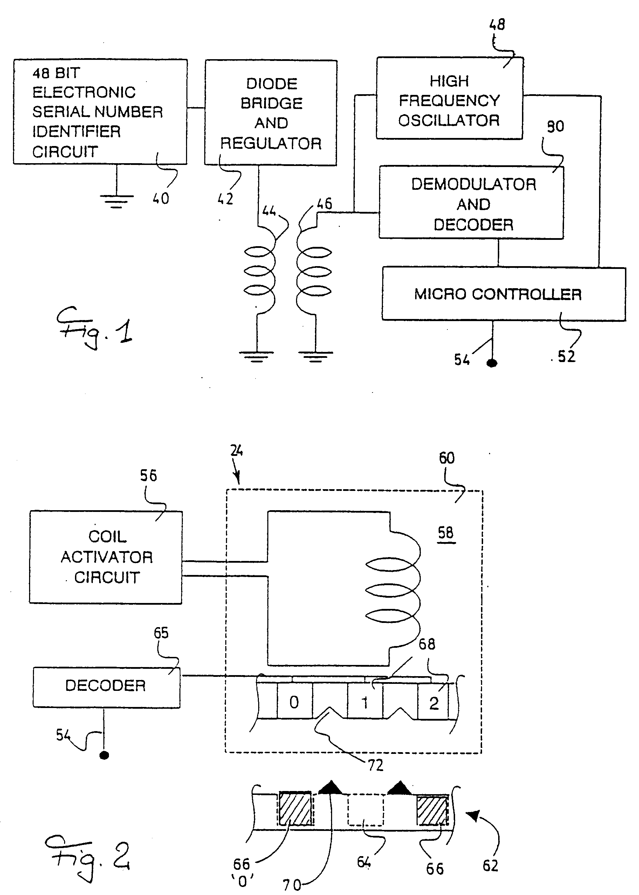

In the preferred embodiment, as shown in Fig. 1, a small printed circuit board is provided on a magnetically activated bottle stopper valve. The printed circuit board has a secondary coil (44) on its upper surface, and a microelectronic diode bridge and voltage regulator circuit (42) mounted on the underside of the board. Also mounted on the underside is an integrated 48 bit serial number identifier circuit (40). Circuit (40) when powered will vary its impedance from 500kΩ to 5kΩ in a serial transmission fashion to give out its 48 bit serial number code.

The printed circuit board can be mounted on a shoulder of a conventional magnetically activated bottle stopper valve, and thus can be ring shaped. The conventional stopper valve is described in US patent 3,920,149. A primary coil (46) is provided on a base of an activator coil unit (not shown) such that when the activator coil unit is placed on the stopper valve, the two coils (44) and (46) form a transformer unit.

A microcontroller (52) gives a signal to a high frequency oscillator (48) to generate a high frequency signal driving coil (46). As the power received by coil (44) is rectified and regulated by means (42), the identifier circuit (40) begins changing the impedance serially and this time varying change in impedance affects the impedance of coil (44) which is detectable on coil (46). The change of impedance of coil (44) is transmitted through coil (46) and then demodulated and decoded by circuit (50). The resulting identification serial number is passed to microcontroller (52) which then outputs the identification number on output (54). Output (54) can be used by a bar control system to know exactly which bottle is being used. This information is used for inventory purposes.

In the preferred embodiment, the circuit (40) is a DS2400 by Dallas.

In the other embodiment as shown in Fig. 2, the activator coil unit (60) has a coil (58) whose magnetic field serves to open the magnetic valve of the stopper (not shown). In the base of unit (60), nine Hall effect microswitches (68) are provided evenly spaced around its circumference. The stopper (62) is provided with metal peg receiving means (64) which are arranged on a ring like upper surface of the stopper such that when unit (60) sits on stopper (62), the microswitches (68) overlie the means (64). Nine alignment notches (72) are provided in the base of the unit (60) and nine corresponding wedge like tabs (70) are provided on the stopper (62), such that the unit (60) will rest on the stopper (62) in any one of nine given positions. The unit (60) is simply placed on the stopper (62) and rotated a few degrees until the notches (72) mate with the tabs (70).

A first one of the receiving means (64) (the extra one, labelled as '0') is always provided with a metal peg (66), and this metal peg is raised more than the other pegs (66) such that the microswitch (68) located over the '0'peg (66) will change state first when coil (58) is energized to open the valve of the stopper (62). The position of the '0' peg (66) being known, the position and orientation of the other eight receiving means also becomes known. Thus the decoding means (65) quickly establish the presence or absence of pegs (66) in each of the means (64), and the i.d. code of the stopper is easily determined. The Hall effect switches (68) will remain open as the magnetic field of coil (58) is increased over a 50 ms time ramp by activator circuit (56) in the absence of a corresponding metal peg (66), and will close in the presence of the corresponding metal peg (66). The eight states of the presence/absence of the metal pegs (66) provide the eight bit identifier code for the stopper (62). The code output (54) is generated by decoder (65). The Hall effect microswitches are UGN-3140 by Sprague. The 'O' peg (66) can be replaced by a magnet to put the corresponding switch (68) in its active state.

Of course, it is possible to provide only one notch and groove arrangement such that there is only one alignment position in which the unit (60) mates with the stopper (62). In this case, the extra metal peg (66) and microswitch (68) are not required as the positional arrangement will be inherently known.

Although the decoding can take place as coil (58) is energized to open the stopper valve, it is also possible to check the code while energizing coil (58) so as to close the stopper valve (by reverse current), prior to allowing dispensation.

## Claims

1. A beverage dispenser coding device for use with a magnetically activated bottle stopper valve, the device comprising:
a primary inductance coil (46) provided on an activator coil unit for use in opening the stopper valve;
a secondary inductance coil (44) provided on the stopper valve;
rectifier means (42) connected to said secondary coil (44) for rectifying and regulating current generated in said secondary coil;
serial identifier circuit means (40) connected to said rectifier means (42) for making a pattern of impedance changes in said secondary coil, said pattern being a serial bit pattern representing an identification number;
an oscillator connected (48) to said primary coil; and
demodulator and decoder means (50) connected to said primary coil for detecting and decoding said pattern to obtain the identification number.

2. Device as defined in claim 1, wherein said circuit means, said rectifier means and said secondary coil are provided on a printed circuit board.

3. Device as defined in claim 1, wherein said rectifier means comprise a diode bridge and a voltage regulator.

4. A beverage dispenser coding device for use with a magnetically activated bottle stopper valve, the device comprising:
a plurality of Hall effect transducers (68) provided on a base of an activator coil unit (60) for use in opening the stopper valve;
a plurality of metal peg (66) receiving means (64) provided on the stopper valve to be proximate said transducers when said activator coil unit is placed on the stopper valve;
alignment means (70,72) for aligning said transducers with respect to said peg receiving means in a predetermined position; and
decoder means (65) for reading said transducers when the activator coil (56) is energized to determine whether a metal peg is present in said corresponding metal peg receiving means and thereby to obtain a binary encoded identification number.

5. Device as defined in claim 4, wherein said transducers are Hall effect microswitches (68), the device further comprising one extra Hall effect microswitch on said activator coil unit and one extra corresponding metal peg receiving means provided with a metal peg on said stopper valve, the extra metal peg having a different permeability as seen by the extra microswitch such that the extra Hall effect microswitch will change state at a different time, whereby said decoder means can determine a position of the extra metal peg by said different time.

6. Device as defined in claim 4, wherein said alignment means comprise a wedge shaped tongue (70) and notch (72) arrangement provided on said activator coil unit and said stopper valve.

7. Device as defined in claim 6, wherein said transducers are Hall effect microswitches, said alignment means comprise as many wedge shaped tongue and notch arrangements as there are metal pegs, and the device further comprises one extra Hall effect microswitch on said activator coil unit and one extra corresponding metal peg receiving means provided with a metal peg on said stopper valve, the extra metal peg having a different permeability as seen by the extra microswitch such that the extra Hall effect microswitch will change state at a different time, whereby said decoder means can determine a position of the extra metal peg by said different time.

8. Device as defined in claim 7, wherein said transducers are eight in number, whereby said identification number is between 1 and 255.

9. Device as defined in claim 5 or 7, wherein said extra metal peg is raised with respect to its neighboring metal pegs, such that the extra Hall effect microswitch will change state before said neighboring metal pegs.

## Patentansprüche

1. Kodierte Getränke-Abgabevorrichtung zum Einsatz mit einem magnetisch aktivierbaren Fiaschenverschiußventil, wobei das System aufweist:
eine an einer Aktivierspuleneinheit zur Benutzung beim Öffnen des Verschlußventils vorgesehene primäre Induktionsspule (46);
eine an dem Verschlußventil angeordnete sekundäre Induktionsspule (44);
ein mit der sekundären Spule (44) zur Verstärkung und Regulierung des in der sekundären Spule erzeugten Stromes vorgesehenes Verstärkermittel (42);
serielle Erkennungsschaltkreismittel (40), die mit dem Verstärkungsmittel (42) zur Erzeugung eines Musters aus Impedanzänderungen in der besagten sekundären Spule verbunden sind, wobei dieses Muster ein serielles Muster ist, das eine Identifikationsnummer wiedergibt;
ein mit der primären Spule verbundener Osziliator (48); und
Demodulator- und Dekodiermittel (50), die mit der primären Spule zur Dedektion und Dekodierung des besagten Musters zum Erhalten der Identifikationsnummer verbunden sind.

2. Vorrichtung, wie in Anspruch 1 definiert, worin die Schaltkreismittel, die Verstärkermittel und die sekundäre Spule auf einer gedruckten Schaltkreisplatine angeordnet sind.

3. Vorrichtung, wie in Anspruch 1 definiert, worin die Verstärkungsmittel eine Diodenbrücke und einen Spannungsregulator umfassen.

4. Eine kodierte Getränke-Abgabevorrichtung zum Gebrauch in Verbindung mit einem magnetisch aktivierbaren Flaschenverschlußventil, wobei die Vorrichtung aufweist:
eine Vielzahl von Halleffekt-Wandlern (68), die auf einem Träger (60) einer Aktivierspuleneinheit zum Öffnen des Verschlußventiles angeordnet sind;
eine Vielzahl von metallische Stifte (66) aufnehmenden Mitteln (64), die an dem Verschlußventil vorgesehen sind, um besagten Wandlern benachbart zu sein, wenn die Aktivierspuleneinheit an dem Verschlußventil plaziert wird;
Ausrichtungsmittel (70, 72) zum Ausrichten der Wandler unter Berücksichtigung der besagten stiftaufnehmenden Mittel in einer vorbestimmten Position; und
Dekodiermittel (65) zum Lesen der Wandler, wenn die Aktivierspule (56) mit Energie versorgt wird, um festzustellen, ob ein Metallstift in dem entsprechenden Metallstiftaufnahmemittel vorhanden ist, und um dadurch eine binärkodierte Identifikationsnummer zu erhalten.

5. Vorrichtung, wie in Anspruch 4 definiert, wobei die Wandler aus Halleffekt-Mikroschaltern (68) bestehen, die Vorrichtung weiter einen extra Halleffekt-Mikroschalter an der Aktivierspuleneinheit umfaßt und ein zusätzliches dementsprechendes Metallstiftaufnahmemittel, das mit einem Metallstift an dem Verschlußventil vorgesehen ist, wobei der zusätzliche Metallstift eine, durch den zusätzlichen Mikroschalter gesehen, unterschiedliche Permiabilität aufweist, so daß der zusätzliche Halleffekt-Mikroschalter seinen Zustand zu einer anderen Zeit ändert, wodurch das Decodermittel die Position des zusätzlichen Metallstiftes durch die besagte unterschiedliche Zeit bestimmen kann.

6. Vorrichtung, wie in Anspruch 4 definiert, wobei die Ausrichtungsmittel eine Anordnung aus einer keilförmigen Zunge (70) und einer Furche (72) umfaßt, die jeweils an der Aktivierspuleneinheit und dem Verschlußventil angeordnet sind.

7. Vorrichtung, wie in Anspruch 6 definiert, worin die Wandler Halleffekt-Mikroschalter sind, die Ausrichtungsmittel so viele keilförmigen Zungen und Furchenanordnungen umfassen, wie es Metallstifte gibt, und die Vorrichtung weiter einen zusätzlichen Halleffekt-Mikroschalter auf der Aktivierspuleneinheit und eine zusätzliche dementsprechende Aufnahmevorrichtung für einen Metallstift mit einem Metallstift an dem Verschlußventil aufweist, wobei der zusätzliche Metallstift eine von dem zusätzlichen Mikroschalter aus gesehen unterschiedliche Permiabilität aufweist, so daß der zusätzliche Halleffekt-Mikroschalter seinen Schaltzustand zu einer anderen Zeit ändert, wodurch das Detektionsmittel die Position des zusätzlichen Metallstiftes anhand dieser unterschiedlichen Zeit bestimmen kann.

8. Vorrichtung, wie in Anspruch 7 definiert, worin eine Anzahl von acht Wandlern eingesetzt wird, wobei die Identifikationsnummer zwischen 1 und 255 liegt.

9. Vorrichtung, wie in den Ansprüchen 5 oder 7 definiert, worin der zusätzliche Metallstift gegenüber seinen benachbarten Metallstiften angehoben ist, so daß der zusätzliche Halleffekt-Mikroschalter seinen Zustand vor den benachbarten Metallstiften ändert.

## Revendications

1. Un dispositif d'encodage pour distributeur de boisson pour utilisation avec une valve d'obturation de bouteille activée magnétiquement, le dispositif comprenant:
- une bobine d'inductance primaire (46) montée sur une unité d'activation de bobine pour utilisation en ouvrant la valve d'obturation;
- une bobine d'inductance secondaire (44) montée sur la valve d'obturation;
- des moyens redresseurs (42) connectés à ladite bobine secondaire (44) pour redresser et réguler un courant généré dans ladite bobine secondaire;
- des moyens de circuit identificateur sériel (40) connectés auxdits moyens redresseurs (42) pour former un réseau de changements d'impédance dans ladite bobine secondaire, ledit réseau étant un un réseau à bit sériel représentant un numéro d'identification;
- un oscillateur (48) connecté à ladite bobine primaire; et
- des moyens de démodulation et de décodage (50) connectés à ladite bobine primaire pour détecter et décoder ledit réseau pour obtenir le numéro d'identification.

2. Dispositif tel que défini dans la revendication 1, dans lequel lesdits moyens de circuit, lesdits moyens redresseurs et ladite bobine secondaire sont montés sur une plaquette de circuits imprimés.

3. Dispositif tel que défini dans la revendication 1, dans lequel lesdits moyens redresseurs comprennent un pont de diodes et un régulateur de tension.

4. Un dispositif d'encodage pour distributeur de boisson pour utilisation avec une valve d'obturation de bouteille activée magnétiquement, le dispositif comprenant:
- une pluralité de transducteurs à effet de Hall (68) montés sur une base d'une unité d'activation de bobine (60) pour utilisation en ouvrant la valve d'obturation;
- une pluralité de moyens récepteurs (64) de fiches métalliques (66) montés sur la valve d'obturation pour être à proximité desdits transducteurs lorsque l'unité d'activation de bobine est placée sur la valve d'obturation;
- des moyens d'alignement (70, 72) pour aligner lesdits transducteurs par rapport auxdits moyens récepteurs de fiches dans une position prédéterminée; et
- des moyens de décodage (65) pour lire les transducteurs lorsque la bobine d'activation (56) est alimentée pour déterminer si une fiche métallique est présente dans lesdits moyens récepteurs de fiches métalliques correspondants et ainsi obtenir un numéro d'identification encodé en binaire.

5. Dispositif tel que défini dans la revendication 4, dans lequel lesdits transducteurs sont des micro-interrupteurs (68) à effet de Hall, le dispositif comprenant de plus un micro-interrupteur à effet de Hall additionnel sur ladite unité d'activation de bobine et un moyen récepteur de fiche métallique additionnelle correspondant muni d'une fiche métallique sur ladite valve d'obturation, la fiche métallique additionnelle ayant une perméabilité différente telle qu'observée par le micro-interrupteur additionnel de sorte que le micro-interrupteur à effet de Hall additionnel changera d'état à un moment différent, grâce auquel lesdits moyens de décodage peuvent déterminer une position de la fiche métallique additionnelle audit moment différent.

6. Dispositif tel que défini dans la revendication 4, dans lequel lesdits moyens d'alignement comprennent un arrangement de languette en forme de cale (70) et d'encoche (72) monté sur ladite unité d'activation de bobine et ladite valve d'obturation.

7. Dispositif tel que défini dans la revendication 6, dans lequel lesdits transducteurs sont des micro-interrupteurs à effet de Hall, lesdits moyens d'alignement comprennent autant d'arrangements de languette en forme de cale et d'encoche qu'il y a de fiches métalliques, et le dispositif comprend de plus un micro-interrupteur à effet de Hall additionnel sur ladite unité d'activation de bobine et un moyen récepteur de fiche métallique additionnelle correspondant muni d'une fiche métallique sur ladite valve d'obturation, la fiche métallique additionnelle ayant une perméabilité différente telle qu'observée par le micro-interrupteur additionnel de sorte que le micro-interrupteur à effet de Hall additionnel changera d'état à un moment différent, grâce auquel lesdits moyens de décodage peuvent déterminer une position de la fiche métallique additionnelle audit moment différent.

8. Dispositif tel que défini dans la revendication 7, dans lequel lesdits transducteurs sont au nombre de 8, grâce auquel ledit numéro d'identification est entre 1 et 255.

9. Dispositif tel que défini dans la revendication 5 ou 7, dans lequel ladite fiche métallique additionnelle est surélevée par rapport à ses fiches métalliques voisines, de sorte que le micro-interrupteur à effet de Hall additionnel changera d'état avant lesdites fiches métalliques voisines.
